(19) Europäisches Patentamt
European Patent Office
Office européen des brevets

(11) **EP 2 214 120 A1**

(12) **EUROPEAN PATENT APPLICATION**
published in accordance with Art. 153(4) EPC

(43) Date of publication:
**04.08.2010 Bulletin 2010/31**

(51) Int Cl.:
**G06K 9/00** (2006.01)

(21) Application number: **09768716.4**

(22) Date of filing: **25.06.2009**

(86) International application number:
**PCT/CN2009/000715**

(87) International publication number:
**WO 2009/155791 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.06.2008 CN 200810115547**

(71) Applicant: **Hanwang Technology Co., Ltd. Haidian District, Beijing 100193 (CN)**

(72) Inventors:
• **SHI, Jian Beijing 100193 (CN)**
• **HAO, Zhuqing Beijing 100193 (CN)**

(74) Representative: **Zimmermann, Tankred Klaus et al Schoppe, Zimmermann, Stöckeler & Zinkler Patentanwälte Postfach 246 82043 Pullach bei München (DE)**

(54) **INCLINED IMAGE CAPTURE DEVICE AND FACIAL RECOGNITION SYSTEM**

(57)     An inclined image capture device is provided, comprising an inclined means and a camera lens, wherein the inclined means has an interface which forms an inclined angle to the horizontal plane, and wherein the camera lens is fixed to the interface with its axis is tilted upward. Also, a facial recognition system is provided, comprising an inclined image capture device, a facial recognition cell and an output device.

Figure 2

## Description

### Field of the Invention

The present invention relates to biometric recognition and image capture. In particular, the present invention relates to a facial recognition device, especially to an inclined image capture device and a facial recognition system which uses the device.

### Background of the Invention

Biometric recognition technology has been listed one of the 10 major technologies which have a revolutionary impact on human society in the 21st century. It is currently the most convenient and safe identity identification technology. The biometric recognition technology recognizes a person himself or herself without requiring identifiers outside the human body. It uses human physiological features and behavior features to make identity recognition, and mainly includes fingerprint recognition, facial recognition, iris recognition, gait recognition and so on. Among them, facial recognition is a popular spot in the biometric recognition field at present. Compared with the currently widely-used fingerprint recognition technology, it offers such notable advantages as intuitiveness, convenience, non-contact, friendliness and high user acceptability.

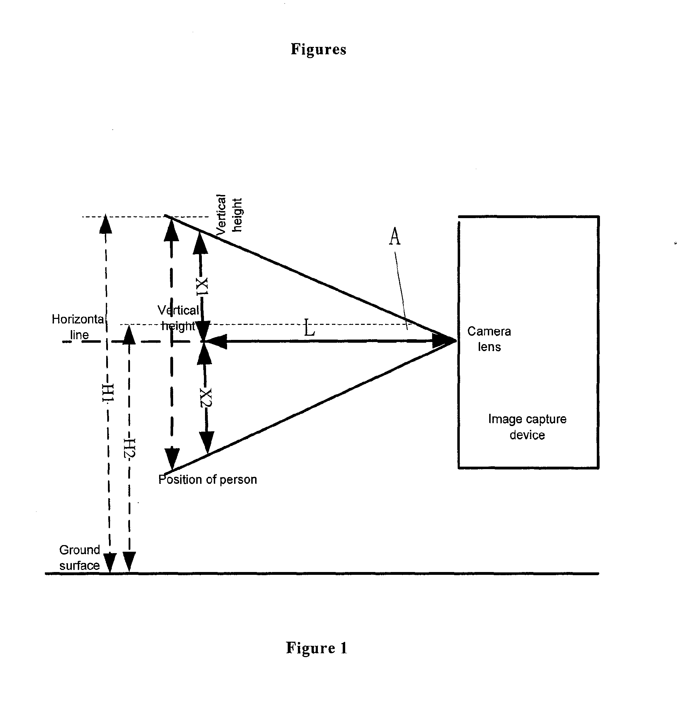

Considering that the quality of captured facial images will directly affect recognition performance, the camera lens used for facial recognition is generally required to have small lens distortion and a vertical visual angle from 30° to 50°. But in real applications, if the axis of the camera lens of the facial recognition system is fixed to the horizontal direction, it will be usually suitable only for users of standard body height (with a height different range of 20-30cm). For those users who are taller or shorter, almost no facial recognition can be made for their captured images, as shown in Fig.1. Body height therefore becomes a constraint factor on the facial recognition systems at present. It seriously affects good user experience of non-contact facial recognition.

### Summary of the Invention

To address this problem, the object of the present invention is to provide an inclined image capture device and a facial recognition system, which can effectively extend the applicable body height difference range.

One aspect of the present invention provides an inclined image capture device, which comprises an inclined means and a camera lens. The inclined means has an interface which forms an inclined angle to the horizontal plane, and the camera lens is fixed to the interface with the axis of the camera lens being tilted upward.

The inclined angle is between 35° and 75°, preferably between 45° and 60°, and more preferably the angle is 53°.

The axis of the camera lens is perpendicular to the interface.

Another aspect of the invention provides a facial recognition system, which comprises an inclined image capture device, a facial recognition cell and an output device. The inclined image capture device includes an inclined means and a camera lens, and the inclined means has an interface which forms an inclined angle to the horizontal plane and the camera lens is fixed to the interface with the axis of the camera lens being tilted upward. The facial recognition cell is connected electronically with the inclined image capture device to receive the captured facial images and perform facial recognition on the captured images. The output device is used to output the recognition results of the facial recognition cell.

The inclined angle is between 35° and 75°, preferably between 45° and 60°, and more preferably the angle is 53°.

The axis of the camera lens is perpendicular to the interface.

A further aspect of the invention provides a facial recognition system, comprising an inclined image capture device, a facial recognition cell and an output device,

the inclined image capture device includes an inclined means and a camera lens, wherein the inclined means has a depressed interface which forms an inclined angle to the horizontal plane, and said camera lens is fixed to said interface with the axis of the camera lens being tilted upward;

the facial recognition cell is connected electrically with the inclined image capture device to receive the captured facial images and perform facial recognition on the received images; and

the output device is used to output the recognition results of the facial recognition cell.

The inclined angle is between 35° and 75°, preferably between 45° and 60°, and more preferably the angle is 53°.

The facial recognition system is based on a PC platform or an embedded platform.

This invention adopts an inclined facial recognition device which can greatly increase the body height difference range and solve the body height problem in facial recognition. With ordinary camera lens, it can increase the body height difference range suitable for facial recognition up to 50cm to meet the needs of recognizing most users in the body height difference range of 1.45-1.95m. In addition, depending on installation height, the inclined facial recognition device can not only meet the needs of people in the normal body height difference range but also be used normally for particularly short (e.g., 1.2-1.5m) and tall (e.g., 1.85-2.20m) users. This invention can therefore meet the needs of almost all users, and offer greater convenience and outstanding user experience.

**Brief Description of the Drawings**

Other features and advantages of the invention will become apparent from the description presented hereinafter by way of non-limiting example and which makes reference to the appended figures, in which:

Fig.1 is a schematic diagram of the body height difference range of a traditional facial recognition system that uses a vertical image capture device;
Fig.2 is a schematic diagram of the body height difference range of an inclined image capture device in the embodiment of the present invention;
Fig.3 is a conceptual diagram of a facial recognition system which uses the inclined image capture device;
Fig.4 is a schematic diagram of an inclined facial recognition system which is built into a wall in the embodiment of the present invention;
Fig.5 is a schematic diagram of a rack-type inclined facial recognition system in the embodiment of the present invention;
Fig. 6 is a schematic diagram of partially inclined facial recognition system in the embodiment of the present invention;
Fig.7 is a schematic diagram of the front appearance of an inclined facial recognition system of the present invention.

**Detail description of the Invention**

The following embodiments are intended to illustrate the present invention other than limiting the present invention.

Fig. 1 is a schematic diagram of the body height difference range of a traditional facial recognition system that uses a vertical image capture device. In the image capture device, the axis of the camera lens is placed along the horizontal direction. Let A be a vertical visual angle of the camera lens and L be an axial distance and assume a face of a length of 30cm, the applicable body height difference range H (cm) of the image capture device can be expressed as:

$$H = H1 - H2 = 2*L*\tan(A/2) - 30 \qquad (1)$$

From Formula (1), it can be seen that when Vertical Visual angle A is 40° and Axial Distance L is 60, 70 and 80cm, respectively, Body height difference range H of the image capture device is 13, 20 and 28cm, respectively.

Table 1

| Axial Distance L (cm) | Body Height Difference Range H (cm) |
|---|---|
| 60 | 13 |
| 70 | 20 |
| 80 | 28 |
| Calculation conditions: | |
| Vertical Visual Angle A = 40°<br>Face Length = 30cm | |

It can be seen from the table 1 that even when the axial distance is 80cm, the image capture device has only an applicable body height difference range of 28cm, which can hardly meet the needs of a larger body height difference range. By increasing the axial distance, it is possible to get a larger body height difference range. To recognize an object with a larger body height difference range when the axial distance is increased, the object to be recognized will need to stand in a position farther away from the camera lens. This will seriously affect the quality of captured facial images. Generally speaking, the preferred axial distance is therefore between 50 and 80cm.

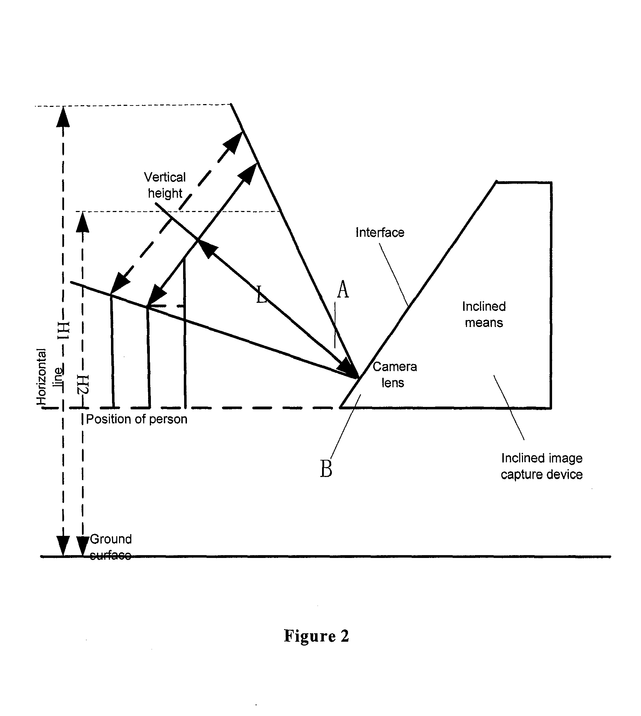

Fig.2 is a schematic diagram of the body height difference range of an inclined image capture device in an embodiment of the present invention. In this embodiment, the image capture device includes an inclined means and camera lens, and the inclined means has an interface which forms an inclined angle to the horizontal plane. Let B be the inclined angle of the inclined means, the camera lens is fixed to the interface with the axis of the camera lens being tilted upward, thereby forming an angle of 90 - B degrees from the horizontal plane. Again, let A be the vertical visual angle of the camera lens and L be the axial distance and assume a face length of 30cm, the applicable body height difference range H (cm) of the inclined image capture device can be expressed as:

$$H = H1 - H2 = 2*L*\tan(A/2) - 30 + \sin(B) *[ 2*L*\tan(A/2) - 30] \quad (2)$$

From Formula (2), it can be seen from the table 2 that when Vertical Visual angle A is 40°, Inclined Angle is 53° and Axial Distance L is 60, 70 and 80cm, respectively, Body Height Difference Range H of the inclined image capture device is 23, 36 and 50cm, respectively.

Table 2

| Axial Distance L (cm) | Body Height Difference Range H (cm) |
|---|---|
| 60 | 23 |
| 70 | 36 |
| 80 | 50 |
| Calculation conditions:<br>Vertical Visual Angle A = 40°<br>Inclined Angle B = 53°<br>Face Length = 30cm | |

In the embodiment of the present invention, an inclined angle of 53° is selected. However, it should be kept in mind that any inclined angle may be selected within a range suitable for capturing frontal facial images. Generally speaking, the inclined angle is between 45° and 60°. However, the present invention finally selects a preferred inclined angle of 53° through repeated experiments based on ergonomics, infrared technology, photography and imaging principles and facial recognition technology. This both suits the natural bow posture angle of the human body and maximally increases the image capture range.

In the embodiment, a vertical visual angle of 40° is selected. However, it should be known that this invention applies to any vertical visual angle between 0 and 40°.

In addition, the inclined means can be made of plastics, metal or other different materials.

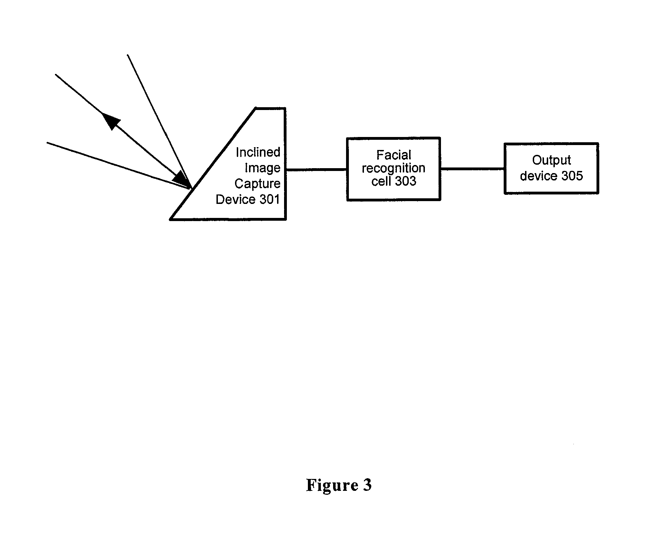

Fig.3 is a conceptual diagram of a facial recognition system which uses an inclined image capture device. The facial recognition system of the present invention can be based on a PC platform or an embedded platform, such as DSP, Strong-Arm and ASP. The facial recognition system includes Inclined Image Capture Device 301, Facial Recognition Cell 303 and Output Device 305. Inclined Image Capture Device 301 includes an inclined means and a camera lens, and the inclined means has an interface which forms an angle, such as 53°, to the horizontal plane. The camera lens is fixed to the interface with the axis of the camera lens being tilted upward. Facial Recognition Cell 303 is connected electronically with Inclined Image Capture Device 301 to transmit the facial images from Image Capture Device 301 to Facial Recognition Cell 303. Facial Recognition Cell 303 performs facial recognition on the received images and returns the recognition results to Output Device 305, such as a display screen, and Output Device 305 displays the recognition results.

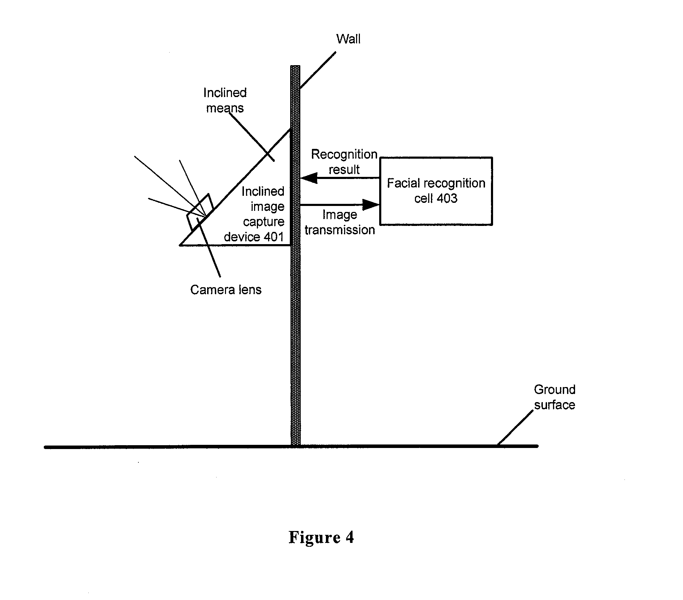

Fig.4 is a schematic diagram of an inclined facial recognition system which is built into a wall in the embodiment of the present invention.

As shown in Fig.4, the inclined facial recognition system of the present invention can be embedded in a wall. The inclined means of Inclined Image Capture Device 401 can be set outside the wall, which has an interface forming an angle to the horizontal plane. The camera lens can be fixed to the interface with the axis of the camera lens being tilted upward, so that the image capture range of the camera lens is not blocked by the wall. Also, Facial Recognition Cell 403 can be embedded in the wall. The inclined Image Capture Device 401 is connected electronically with Facial Recognition Cell 403 to transmit the captured images to Facial Recognition Cell 403 and receive the recognition results transmitted by Facial Recognition Cell 403.

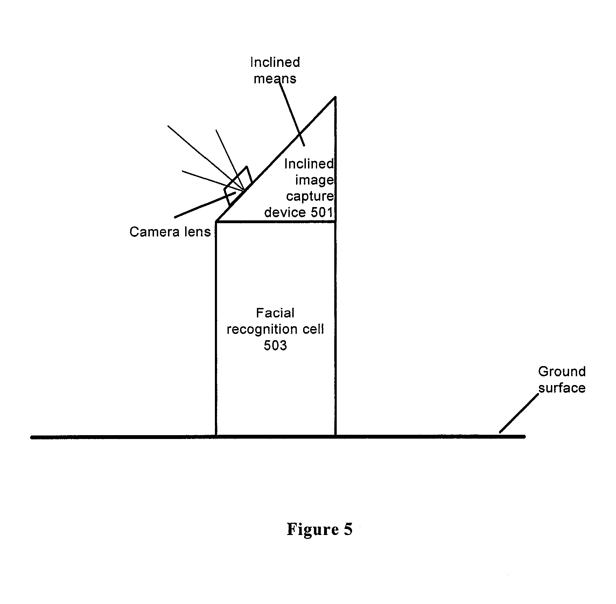

Fig.5 is a schematic diagram of a rack-type inclined facial recognition system in an embodiment of the present invention.

As shown in Fig. 5, the inclined facial recognition system of the present invention is implemented in the form of a rack. Rack 500 includes Inclined Image Capture Device 501 and Facial Recognition Cell 503. The inclined means of Inclined Image Capture Device 501 has an interface which forms an inclined angle to the horizontal plane, while the camera lens is fixed to the interface with the axis of the camera lens being tilted upward. The inclined Image Capture Device 501 is connected electronically with Facial Recognition Cell 503 to transmit the captured images to Facial Recognition Cell 503 and receive the recognition results transmitted by Facial Recognition Cell 503.

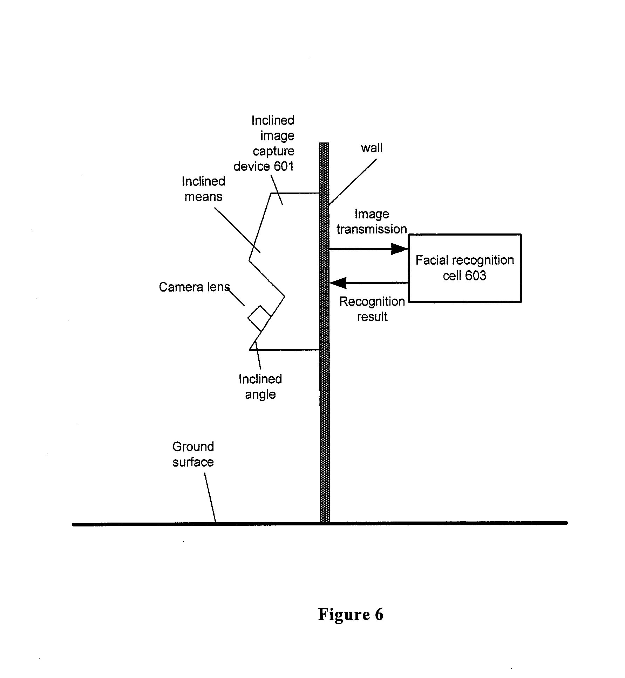

Fig. 6 is a schematic diagram of partially inclined facial recognition system in the embodiment of the present invention.

As shown in Fig. 6, in the inclined facial recognition system of this embodiment, the camera lens is arranged at an inclined angle. The camera lens is mounted on the depressed interface of the inclined means, which interface is arranged at an inclined angle to the horizontal plane. The camera lens is fixed to the interface with its axis being tilted upward.

In this embodiment, the inclined angle is between 35° and 75°, preferably between 45° and 60°, and more preferably the angle is 53°. The Inclined Image Capture Device 601 is arranged separate from the camera lens, and is connected electronically with Facial Recognition Cell 603 to transmit the captured images to Facial Recognition Cell 603 and receive the recognition results transmitted by Facial Recognition Cell 603.

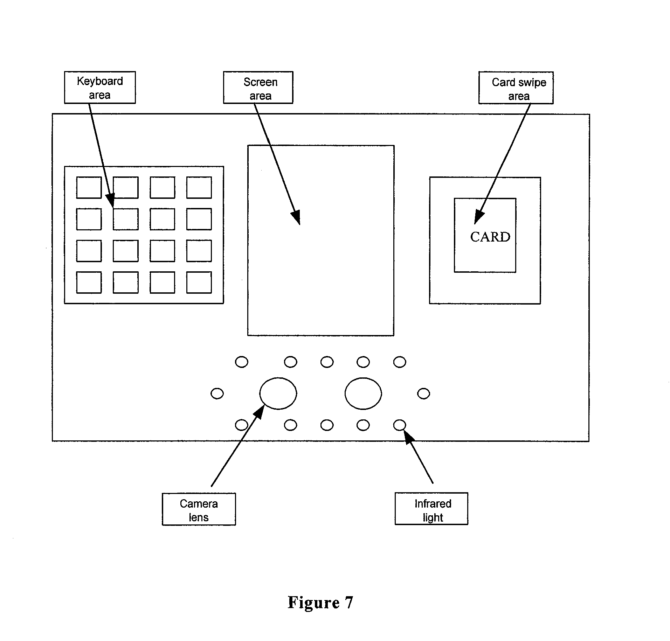

Fig.7 is a schematic diagram of the front appearance of an inclined facial recognition system of the present invention. The inclined facial recognition device includes an inclined image capture device, a screen area, a keyboard area, a card swipe area and the like, where the camera lens is arranged in the lower part of the inclined means so that the recognition device can be installed higher.

This invention adopts an inclined facial recognition device which can greatly increase the body height difference range and solve the body height problem in facial recognition. With ordinary camera lens, it can increase the body height difference range suitable for facial recognition up to 50cm to meet the needs of recognizing most users in the body height difference range of 1.45-1.95m. In addition, depending on installation height, the inclined facial recognition device can not only meet the needs of people in the normal body height difference range but also be used normally for particularly short (e.g., 1.2-1.5m) and tall (e.g., 1.85-2.20m) users. This invention can therefore meet the needs of almost all users, and offer greater convenience and outstanding user experience.

Industrial applications

The present invention provides an inclined image capture device, which comprises an inclined means and a camera lens. The inclined means has an interface which forms an inclined angle to the horizontal plane, and the camera lens is fixed to the interface with the axis of the camera lens being tilted upward. The present invention provides a facial recognition system, which comprises an inclined image capture device, a facial recognition cell and an output device. The image capture device and the facial recognition system can greatly extend the range of body height difference and solve the problem of body height in facial recognition. They are highly convenient and can meet the needs of almost all users.

**Claims**

1. An inclined image capture device, comprising an inclined means and a camera lens, wherein the inclined means has an interface which forms an inclined angle to the horizontal plane, and wherein the camera lens is fixed to the interface with the axis of the camera lens being tilted upward.

2. The image capture device of Claim 1, wherein said inclined angle is between 35° and 75°.

3. The image capture device of Claim 2, wherein said inclined angle is between 45° and 60°.

4. The image capture device of Claim 3, wherein said inclined angle is 53°.

5. The image capture device of Claim 1 or 2, wherein said axis of camera lens is perpendicular to said interface.

6. A facial recognition system, comprising an inclined image capture device, a facial recognition cell and an output device,
   wherein said inclined image capture device includes an inclined means and a camera lens, wherein the inclined means has an interface which forms an inclined angle to the horizontal plane, and said camera lens is fixed to said interface with the axis of the camera lens being tilted upward;
said facial recognition cell is connected electrically with the inclined image capture device to receive the captured facial images and perform facial recognition on the received images; and
said output device is used to output the recognition results of the facial recognition cell.

7. The facial recognition system of Claim 6, wherein said inclined angle is between 35° and 75°.

8. The facial recognition system of Claim 7, wherein said inclined angle of the inclined means is between 45° and 60°.

9. The facial recognition system of Claim 8, wherein the inclined angle of the inclined means is 53°.

10. The facial recognition system of Claim 6 or 7, wherein the axis of the aforesaid camera lens is perpendicular to said interface.

11. The facial recognition system of Claim 6, said facial recognition system is based on a PC platform.

12. The facial recognition system of Claim 6, said facial recognition system is based on an embedded platform.

13. A facial recognition system, comprising an inclined image capture device, a facial recognition cell and an output device,
wherein said inclined image capture device includes an inclined means and a camera lens, wherein the inclined means has a depressed interface which forms an inclined angle to the horizontal plane, and said camera lens is fixed to said interface with the axis of the camera lens being tilted upward;
said facial recognition cell is connected electrically with the inclined image capture device to receive the captured facial images and perform facial recognition on the received images; and
said output device is used to output the recognition results of the facial recognition cell.

14. The facial recognition system of Claim 13, wherein said inclined angle is between 35° and 75°.

15. The facial recognition system of Claim 14, wherein said inclined angle of the inclined means is between 45° and 60°.

16. The facial recognition system of Claim 15, wherein the inclined angle of the inclined means is 53°.

Figures

Figure 1

**Figure 2**

Inclined
Image
Capture
Device 301

Facial
recognition
cell 303

Output
device 305

Figure 3

Wall

Inclined
means

Recognition
result

Facial recognition
cell 403

Inclined
image
capture
device 401

Image
transmission

Camera lens

Ground
surface

**Figure 4**

Inclined
means

Inclined
image
capture
device 501

Camera lens

Facial
recognition cell
503

Ground
surface

**Figure 5**

Figure 6

Keyboard
area

Screen
area

Card swipe
area

CARD

Camera
lens

Infrared
light

Figure 7

## INTERNATIONAL SEARCH REPORT

| International application No. |
|---|
| PCT/CN2009/000715 |

**A. CLASSIFICATION OF SUBJECT MATTER**

G06K 9/00 (2006.01)i

According to International Patent Classification (IPC) or to both national classification and IPC

**B. FIELDS SEARCHED**

Minimum documentation searched (classification system followed by classification symbols)

IPC:G06K

Documentation searched other than minimum documentation to the extent that such documents are included in the fields searched

Electronic data base consulted during the international search (name of data base and, where practicable, search terms used)

WPI EPODOC PAJ CPRS CNKI(incline camera angle interface recognition face)

**C. DOCUMENTS CONSIDERED TO BE RELEVANT**

| Category* | Citation of document, with indication, where appropriate, of the relevant passages | Relevant to claim No. |
|---|---|---|
| PX | CN 201218952 Y(HANWANG TECHNOLOGY CO.,LTD ) 08 Apr.2009(08.04.2009)claims 1-10 | 1,3-6,8-13,15-16 |
| A | CN 1687956 A(SHANGHAI POWER COLLEGE)26 Oct. 2005(26.10.2005)the whole document | 1-16 |
| A | CN 2916770 Y(ZHONGKE TAIJI SCI & TECHNOLOGICAL SHENZHEN CO LTD)27 Jun.2007(27.06.2007)the whole document | 1-16 |
| A | JP 2000134515 A(NIPPON REGULATOR KK)12 May 2000(12.05.2000)the whole document | 1-16 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 Aug.2009(31.08.2009) | **24 Sep. 2009 (24.09.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG,Yankun** Telephone No. (86-10)62411680 |
|---|---|

Form PCT/ISA /210 (second sheet) (July 2009)

## INTERNATIONAL SEARCH REPORT
Information on patent family members

| | International application No. |
|---|---|
| | PCT/CN2009/000715 |

| Patent Documents referred in the Report | Publication Date | Patent Family | Publication Date |
|---|---|---|---|
| CN201218952Y | 08.04.2009 | NONE | |
| CN1687956A | 26.10.2005 | NONE | |
| CN2916770Y | 27.06.2007 | NONE | |
| JP2000134515A | 12.05.2000 | NONE | |

Form PCT/ISA/210 (patent family annex) (July 2009)